# EUROPEAN PATENT SPECIFICATION

(11) **EP 0 551 954 B1**
(45) Date of publication and mention of the grant of the patent: **27.12.1996**
(21) Application number: 93200101.9
(22) Date of filing: 15.01.1993
(51) Int. Cl.: C08B 30/12, C08L 3/02

(54) **A method of preparing destructurized starch**
Verfahren zur Herstellung von destrukturierter Stärke
Procédé pour la préparation d'amidon déstructuré

(30) Priority: 16.01.1992 NL 9200077
(43) Date of publication of application: 21.07.1993
(73) Proprietor: Coöperatieve Verkoop- en Productievereniging van Aardappelmeel en Derivaten 'AVEBE' B.A., NL-9641 JA Veendam (NL)
(72) Inventor: Jongboom, Remigius Oene Jules, NL-6441 HE Brunssum (NL); Tournois, Huibert, NL-3911 CD Rhenen (NL); Kraak, Andries, NL-9761 HZ Eelde (NL)
(74) Representative: Smulders, Theodorus A.H.J., Ir.

(56) References cited:
- EP-A- 0 400 531
- EP-A- 0 408 502
- EP-A- 0 409 781
- GB-A- 945 207
- US-A- 3 528 853
- STARKE. vol. 43, no. 4, April 1991, WEINHEIM DE pages 138 - 145 WERNER WIEDMANN ET AL. 'Compounding of thermoplastic starch with twin-screw extruders'

## Description

The present invention relates to the preparation of destructurized starch capable of being used in the production of biodegradable shaped articles.

Synthetic polymers such as polyethylene, polypropylene, polystyrene and polyvinyl chloride are not biodegradable. These polymers are used on a large scale in the production of shaped articles such as films, foils, laminates, packaging materials, insulating material and all types of plastic objects. After use these products must largely be processed further as waste products. Because these materials are not biodegradable, this causes big environmental problems. The number of dumps is limited, and incineration requires high investments and often causes additional environmental problems (dioxin). For this reason there is an urgent need for biodegradable polymers which are capable of wholly or partially replacing the above-mentioned synthetic polymers. Biodegradable starch products are eligible to meet this need.

European patent 118,240 relates to the production of shaped articles from starch. For this purpose, granular starch (containing from 5 to 30 wt.% moisture) is converted by means of extrusion at high temperature to a liquid phase ("melt"), which is then processed by a shaping process (extrusion; injection moulding and the like) to a shaped article (film, foil, capsules, matrix and the like). In this method the liquid phase is therefore immediately processed further.

A variant of this process is described in European patent 304,401. Here the shaped articles are produced in two phases. In the first phase the solid starch product is liquefied ("molten") in an extruder and cooled. The cooled solid material is then reduced by a mechanical operation to a granulate. In the second phase the granulate is liquefied again in a shaping machine (extruder; injection moulding machine) and is then converted to a shaped article.

In the literature dealing with shaped starch articles, the conversion of starch granules in the presence of water to a liquid phase ("melt" or solution) is often designated by the term "destructurization". The product obtained is then called destructurized starch. By this is meant that when converting starch granules and water to a liquid phase, the original granular structure is wholly or partially lost. Moreover, a substantially complete or partial homogenization of the starch product takes place.

US-A-3 528 853 discloses a process for producing a non-dusting starch product, wherein an intimate mixture of wet common starch having a moisture content of 34 to 44 wt.% and up to 5 wt.% gelatinized starch is extruded and then dried.

EP-A-0 409 781 discloses a destructurized starch composition which also contains a chemically modified polysaccharide such as hydroxyethylcellulose. The composition is prepared by heating a mixture of starch having a moisture content of 5 to 40 wt.% and the modified polysaccharide under pressure until a homogeneous melt is obtained.

In the known methods of preparing destructurized starch, the starting substance is, in general, starch as a solid having a moisture content ranging from 5 to 40 wt.%. The processing of this starch to a liquid product requires relatively high temperatures and mechanical forces. Under these conditions the destructurizing process is hard to control. Moreover, there is more risk of undesirable foaming, discoloration and chemical disintegration and degradation of the starch molecules.

In the preparation of destructurized starch according to the present invention, the starting material is a starch suspension in which the ungelatinized starch granules are suspended in an aqueous solution of a water-soluble polymer, the moisture content of the starch suspension ranging from 45 to 90 wt.%. This aqueous solution has sufficient viscosity to inhibit sagging of the starch granules. According to the invention the starch suspension is subjected at an elevated temperature to mechanical forces (e.g., in an extruder or kneader), which results in a relatively homogeneous solution of destructurized starch. This solution is dried to a solid product. The dried product is preferably converted to a granulate. The dried product or the granulate may then be liquefied in a shaping machine and may finally be converted to a shaped article.

The suspended starch used according to the invention is a granular native starch and/or modified starch. The starch may be isolated from various agricultural products such as potato starch, corn starch, tapioca starch, wheat starch, waxy corn starch, pea starch, rice starch, high amylosis starch and sago starch. Mixtures of these starch types may also be used. The modified starches may be prepared from native starch by, e.g., acid hydrolysis, dextrination, oxidation, esterification, etherification, graft polymerization and/or crosslinking. It is also possible to use mixtures (native/modified or two or more types of modified starches) as starting material for the preparation of destructurized starch.

According to the invention the ungelatinized starch granules are suspended in an aqueous solution of a water-soluble polymer. In principle, all water-soluble polymers are eligible, such as native starch, modified starch, cellulose derivatives, natural gums and their derivatives, microbiological polysaccharides, proteins and water-soluble synthetic polymers. These polymers may be dissolved in water and may thus form liquids having an increased viscosity over the viscosity of water. This increased viscosity causes the starch granules suspended in the liquid to be kept in suspension to the desired degree. Without using the above polymers, the suspended starch granules will sag relatively fast, which results in that the system (water with sagged granules at the bottom) can hardly be processed further. The liquid having increased viscosity therefore functions as a "carrier" for the starch granules.

The suspension to be processed according to the invention has a moisture content ranging from 45 to 90 wt.% and preferably from 50 to 75 wt.%. The amount of water-soluble polymer may vary within wide limits and, inter alia, depends on the properties (viscosity in solution and the like) of the polymer. Preferably, the amount of water-soluble polymer is from 0.5 to 50 wt.% of the amount of suspended ungelatinized starch (both calculated on the dry substance).

The ungelatinized suspended starch consists preferably of potato starch or modified potato starch. Potato starch products dissolve in water at relatively low temperatures and give a starch granulate that is more transparent than the starch granulates obtained with other starch types. If desired, the cation population of potato starch may be adjusted as described in European patents 298,920 and 391,851.

When preparing the starch suspension, there is preferably first prepared an aqueous solution of water-soluble polymer. When using starch products as water-soluble polymer, the starch is first gelatinized (dissolved) in water. However, it is also possible to blend pregelatinized starch with cold water to prepare a starch solution. If necessary, the solution with water is diluted to the desired moisture content. Subsequently, the ungelatinized starch may be added to the solution of the water-soluble polymer. There is thus obtained an aqueous suspension of ungelatinized starch, the granules of which are kept in suspension by the increased viscosity due to the dissolved polymer. If desired, the starch suspension may also be prepared in another sequence than the one indicated above.

According to the invention the starch suspension prepared is subjected to mechanical forces at an elevated temperature. This may be done in machines suitable for the purpose, such as extruders, rotators, mixers or kneaders. The temperatures to be used in these machines range from 70 to 150°C, preferably from 80 and, usually, 120°C and preferably from 80 to 100°C. The temperatures used may be lower in the method according to the invention than in the methods hitherto known, in which the starting substance is a starch having a moisture content up to 40 wt.%. The use of a starch suspension (moisture content above 45 wt.%) according to the invention presents the advantage that the destructurization of the starch may be effectuated at relatively lower temperatures. This results in a better controllable process and a lower risk of discolouration and of disintegration and degradation of the starch molecules. After the ungelatinized starch has been destructurized in the above-mentioned machines, a substantially homogeneous starch solution is obtained. According to the invention this starch solution is dried to a moisture content preferably ranging from 5 to 35 wt.%. This drying may be done, e.g., with hot air, infrared radiation, cold air, microwave and osmosis. The drying rate may be varied to affect crystallinity and strength. Before the drying process, the resulting starch product may be brought into a suitable form (e.g., by cutting into pieces) to facilitate the drying process.

The resulting dried destructurized starch product is preferably converted to a granulate. As used herein, a granulate is a product obtained by reducing the above starch product. This may be done by various mechanical operations such as cutting, breaking, grinding, ball mill operation, milling, planing etc. The resulting starch granulates are in the form of pills, pellets, granules, flakes, cylinders, blocks, rods, massive, hollow or filled fibres or other processing forms.

The resulting dried starch product or starch granulate may be processed to shaped articles by means of shaping machines. The method is analogous to the processing of thermoplastic synthetic polymers to shaped articles. The starch granulate may be brought into the desired shape, e.g., by extrusion, injection moulding, blow moulding, calendering, pressing and foil blowing through the liquid phase. After cooling, the desired shaped articles are obtained, such as capsules, bottles, films, foils, laminates, coatings, receptacles, foamed plastic, packaging articles, disposable bags and the like. The shaped articles may be used as packaging material, insulating material, in horticulture, as agricultural plastic, soluble packings, and in a variety of other applications for which synthetic shaped articles have been used thus far.

Before or after destructurization, many types of additives may be added to the starch product. A great many additives are listed in the above-mentioned European patents 118,240 and 304,401. These additives may also be used in the method according to the invention. They are, inter alia, plasticizers, lubricants, fillers, colouring agents, synthetic polymers, biopolymers, acids, bases, sugars, proteins, glycerides, texturizing agents, fats, foaming agents and vegetable fibres such as potato fibres.

It is also possible according to the invention to incorporate pesticides, insecticides, fungicides, herbicides, artificial fertilizer, trace elements etc. into the starch suspension to be processed. These substances are homogeneously incorporated into the destructurized starch product (matrix structure). By allowing the starch product or starch granulate or the articles formed therefrom to disintegrate at a desired rate (controlled release) (by disintegration and/or dissolving and/or bioerosion), the above-mentioned substances are released in the desired amounts over time.

The invention will be illustrated by the following examples. The term "parts" relates to "parts by weight".

### Example 1

Native potato starch is suspended in water of 20°C in the ratio of 2.5 parts of starch to 22.5 parts of water. This suspension is then heated to 60°C under vigorous agitation with gelatinization of the starch occurring. Subsequently, water (20 parts) and glycerol (11.5 parts) of 20°C are added to the resulting solution under agitation. After homogenization a following amount of ungelatinized potato starch is added which corresponds to 43.5 parts. Then follows a homogenization under vigorously agitation.

The suspension obtained in the manner described is fed through the hopper into the barrel of a counter-rotating twin-screw extruder (Haake extruder TW 100, model 235200) equipped with different screw compartments (transport, counter-rotation, kneading and pressure build-up) and a temperature profile across the barrel varying from the ingression zone to the die of 70, 90, 90 and 70°C. At the selected number of revolutions the residence time is ca 5 minutes. The extrusion of the above suspension results in a clear transparent viscoelastic solution having a gel-like appearance. This material is dried for 4 days under atmospheric conditions. During cooling and drying the material becomes temporarily turbid, but this turbidity disappears again.

There is obtained a transparent material which is granulated by means of a beater mill. The granulate is pressed to objects at 160°C and at a pressure of 20 tons.

### Example 2

Native corn starch is suspended under agitation in water in the ratio of 2.5 parts of starch to 22.5 parts of water and is heated to 72°C with gelatinization of the starch occurring. Subsequently, water (22.5 parts) and glycerol (11 parts) of 20°C are added thereto under agitation. Ungelatinized corn starch (41.5 parts) is added to the resulting solution under agitation. The resulting suspension is fed through the hopper into the extruder described in Example 1. The barrel temperature varies across the four zones from 70, 125, 110 to 85°C in the die.

The material leaving the extruder is to be processed analogously to the material described in Example 1.

### Example 3

Native wheat starch is suspended under agitation in water in the ratio of 2.5 parts of starch to 22.5 parts of water and is heated to 82°C. Subsequently, water (20 parts) and glycerol (11.5 parts) of 20°C are added thereto under agitation. Ungelatinized wheat starch (43.5 parts) is added to the resulting solution under agitation. The resulting suspension is fed through the hopper into the extruder described in Example 1. The barrel temperature varies across the four zones from 70, 125, 110 to 85°C in the die.

The material leaving the extruder is to be processed analogously to the material described in Example 1.

### Example 4

A mixture is prepared as described in Example 1, with the understanding that instead of 11.5 parts of glycerol only 6 parts of glycerol are used. The material obtained after drying is less flexible than the material obtained in Example 1.

### Example 5

A mixture is prepared as described in Example 2, with the understanding that instead of 11 parts of glycerol only 6 parts of glycerol are used. The material obtained after drying is less flexible than the material obtained in Example 2.

### Example 6

A mixture is prepared as described in Example 3, with the understanding that instead of 11.5 parts of glycerol only 6 parts of glycerol are used. The material obtained after drying is less flexible than the material obtained in Example 3.

## Claims

1. A method of preparing destructurized starch, characterized in that a suspension of ungelatinized starch granules, including granules of modified starch, in an aqueous solution of a water-soluble polymer, the moisture content of the starch suspension ranging from 45 to 90 wt.%, is subjected to mechanical forces at an elevated temperature and the resulting dissolved starch product is dried, after which, if desired, the resulting dried product is processed further to a starch granulate.

2. A method according to claim 1, characterized in that the ungelatinized starch granules consist of potato starch.

3. A method according to claim 1 or 2, characterized in that the starch suspension is subjected to mechanical forces in an extruder.

4. A method according to claims 1-3, characterized in that the increased temperature is from 70 to 150°C.

5. A method according to claim 4, characterized in that the increased temperature is from 80 to 100°C.

6. A method according to claims 1-5, characterized in that the water-soluble polymer is gelatinized starch.

7. A method according to claims 1-6, characterized in that the moisture content of the starch suspension ranges from 50 to 75 wt.%.

8. A method according to claims 1-7, characterized in that the amount of water-soluble polymer ranges from 0.5 to 50 wt.% of the amount of ungelatinized starch (both calculated on the dry substance).

9. Shaped articles made from the dried starch product or the starch granulate obtained according to the method of claims 1-8.

## Patentansprüche

1. Ein Verfahren zur Herstellung destrukturierter Stärke, dadurch gekennzeichnet, dass eine Suspension von nicht gelatiniertem Stärkegranulat einschliesslich Granulat modifizierter Stärke, in einer wässrigen Lösung eines wasserlöslichem Polymers, wobei der Feuchtigkeitsgehalt der Stärkesuspension zwische 45 und 90 Gew.% beträgt, bei einer erhöhten Temperatur mechanischen Kräften ausgesetzt wird und das dabei entstehende gelöste Stärkeprodukt getrocknet wird, wonach falls erwünscht das entstandene getrocknete Produkt zu Stärkegranulat weiterverarbeitet wird.

2. Ein Verfahren nach Anspruch 1, dadurch gekennzeichnet, dass das nicht gelatinierte Stärkegranulat aus Kartoffelstärke besteht.

3. Ein Verfahren nach Anspruch 1 oder 2, dadurch gekennzeichnet, dass die Stärkesuspension in einem Extruder mechanischen Kräften ausgesetzt wird.

4. Ein Verfahren nach den Ansprüchen 1-3, dadurch gekennzeichnet, dass die erhöhte Temperatur von 70 bis 150°C beträgt.

5. Ein verfahren nach Anspruch 4, dadurch gekennzeichnet, dass die erhöhte Temperatur von 80 bis 100°C beträgt.

6. Ein Verfahren nach den Ansprüchen 1-5, dadurch gekennzeichnet, dass das wasserlösliche Polymer gelatinierte Stärke ist.

7. Ein verfahren nach den Ansprüchen 1-6, dadurch gekennzeichnet, dass der Feuchtigkeitsgehalt der Stärkesuspension zwischen 50 und 75 Gew.-% beträgt.

8. Ein verfahren nach den Ansprüchen 1-7, dadurch gekennzeichnet, dass die Menge des wasserlöslichen Polymers zwischen 0,5 und 50 Gew.-% der Menge der nicht gelatinierten Stärke beträgt (beide auf der Grundlage der Trockensubstanz berechnet).

9. Geformte Artikel aus dem getrockneten Stärkeprodukt oder dem Stärkegranulat, die nach den verfahren der Ansprüche 1-8 erhalten wurden.

## Revendications

1. Un procédé de préparation d'amidon déstructuré, caractérisé en ce que on soumet une suspension de granules d'amidon non gélatinisé, incluant des granules d'amidon modifié, dans une solution aqueuse de polymère hydrosoluble, la teneur en humidité de la suspension d'amidon étant comprise entre 45 et 90% en poids, à des forces mécaniques à température élevée, et en ce qu'on sèche le produit d'amidon dissous résultant, après quoi, si on le désire, le produit séché obtenu est soumis à un traitement ultérieur pour former un granulat d'amidon.

2. Un procédé suivant la revendication 1, caractérisé en ce que les granules d'amidon non gélatinisé sont constitués d'amidon de pommes de terre.

3. Un procédé suivant la revendication 1 ou 2, caractérisé en ce qu'on soumet la suspension d'amidon à des forces mécaniques dans une extrudeuse.

4. Un procédé suivant les revendications 1-3, caractérisé en ce que la température élevée est située entre 70 et 150°C.

5. Un procédé suivant la revendication 4, caractérisé en ce que la température élevée est située entre 80 et 100°C.

6. Un procédé suivant les revendications 1-5, caractérisé en ce que le polymère hydrosoluble est de l'amidon gélatinisé.

7. Un procédé suivant les revendications 1-6, caractérisé en ce que la teneur en humidité de la suspension d'amidon est comprise entre 50 et 75% en poids.

8. Un procédé suivant les revendications 1-7, caractérisé en ce que la quantité de polymère hydrosuluble est comprise entre 0,5 et 50% en poids de la quantité d'amidon non gélatinisé (les deux étant calculés sur la substance sèche).

9. Des articles moulés fabriqués à partir du produit d'amidon séché ou du granulat d'amidon obtenu conformément à la méthode des revendications 1-8.
